# EUROPEAN PATENT SPECIFICATION

(11) **EP 3 198 345 B1**
(45) Date of publication and mention of the grant of the patent: **06.01.2021**
(21) Application number: 15781432.8
(22) Date of filing: 21.09.2015
(51) Int. Cl.: G05B 19/409

(54) **LINE FOR THE PRODUCTION OF INDIVIDUAL PRODUCTS IN SUCCESSION IN A CONTINUOUS CYCLE**
FERTIGUNGSSTRASSE ZUR AUFEINANDERFOLGENDEN HERSTELLUNG VON EINZELPRODUKTEN IN EINEM KONTINUIERLICHEN ZYKLUS
CHAÎNE DE FABRICATION DE PRODUITS INDIVIDUELS EN SUCCESSION EN CYCLE CONTINU

(30) Priority: 22.09.2014 IT BO20140518; 22.09.2014 IT BO20140519; 22.09.2014 IT BO20140520
(43) Date of publication of application: 02.08.2017
(73) Proprietor: Sacmi Cooperativa Meccanici Imola Societa' Cooperativa, 40026 Imola (BO) (IT)
(72) Inventor: BARUZZI, Massimiliano, I-48025 Riolo Terme (Ravenna) (IT); COCQUIO, Alessandro, I-47121 Forlì (Forlì-Cesena) (IT); RICCI, Claudio, I-40026 Imola (Bologna) (IT); GUIDOTTI, Gianmario, I-41124 Modena (IT)
(74) Representative: Conti, Marco
(86) International application number: PCT/IB2015/057258
(87) International publication number: WO 2016/046724

(56) References cited:
- WO-A2-2014/097233
- US-A1- 2010 127 824
- US-A1- 2013 024 542
- US-B1- 6 697 681

## Description

### Technical field

The present invention relates to a line and a method for the production of individual products in succession in a continuous cycle.

The invention relates to the technical field of lines for the production of individual products in succession in a continuous cycle.

### Background art

The lines are used, for example, for making decorated ceramic products, in particular tiles or slabs, or containers (typically made of plastic material) filled with beverages. Examples of the lines or parts of them are described in the following patent documents in the name of the same Applicant as this invention: WO2013/080189, WO2013/050845, EP1356909A2, WO2013/045989. Other examples of lines are described in the following patent documents: US2010/0127824A1, US6697681B1 and US2013/0024542A1.

The production lines comprise a plurality of interconnected machines. Each machine performs a process according to a respective configuration, determined by suitable setting parameters of the machine.

For this reason, each machine has a relative local control panel on fitted on the machine, by which users may configure the machine.

Normally, these production lines have large dimensions, in particular in a direction along which the machines interconnected together are positioned.

In this context, it should be noted that the number of users of the line, that is to say, the number of persons present along the line to supervise the operation, is typically very small, relative to the number of machines and the dimensions of the line.

A drawback of these lines consists in the fact that it is relatively likely that the users commit errors in the configuration of the machines. This is due to the large number of settings necessary and the fact that, often, the configuration of a machine affects the configuration of another machine far from the first.

Another drawback, particularly felt in the field of lines for the production of decorated ceramic products, is due to the need to produce large batches of products, and then, inevitably, store them whilst awaiting dispatch. This need derives basically from the fact that the procedure for configuration of the machines of the line for producing the desired type of product is long and complex; typically, this procedure comprises successive adjustments in different machines.

This makes it uneconomical to make small batches of products of the same type.

The difficulty in identifying a recipe suitable for making a predetermined type of product (the term "recipe" is used to mean the set of configurations of all the machines) also means that the manufacturers, in particular of tiles, are generally reluctant to trial new types of product.

This has a negative impact for the market of these manufacturers, for example due to the fact that some potential customers, such as architects, who, in the search for technical solutions which offer the greatest possible potential for their creativity, tend to look towards other products.

### Disclosure of the invention

The aim of this invention is to provide a production line for products which overcomes the above-mentioned drawbacks of the prior art.

More specifically, the aim of this invention is to provide a line for the production of decorated ceramic products in a continuous cycle which allows modifications to the type of product made by the line to be speeded up and simplified.

A further aim of this invention is to provide a line for the production of decorated ceramic products in a continuous cycle which makes the design of new types of products particularly easy.

Another aim is to provide a production line which is particularly reliable and easy to control, which simplifies and speeds up the configuration of the machines.

These aims are fully achieved by the production line according to the invention as characterised in the appended claims.

The invention relates to a line for the production of products in succession. The invention relates to a line for the production of individual products in succession in a continuous cycle.

The line has a plurality of machines interconnected by one or more conveyors according to a predetermined sequence.

Each machine has a local control panel positioned on the machine and forming an interface to allow the user to configure the machine with setting data for that machine.

The line also comprises, a supervision unit, connected to the machines of the line to receive and transmit data according to an activity for monitoring machines, and having a respective interface for the user. According to one aspect of this description, the line comprises one or more portable control panels.

The portable control panel comprises a display unit and an interface for the user.

The control panel is connected in a wireless fashion to the local control panels of the machines and, preferably, to the supervision unit, to communicate with them (with it) without wires.

The portable control panel can be easily transported by the user; for example, it comprises a tablet or mobile phone, for example of the touchscreen type.

The portable control panel has a processor programmed for displaying on the display unit of the portable control panel the interface of the local control panels of each machine, for allowing the user to configure the machine with the setting data, from a remote position using the portable control panel.

For this reason, the portable control panel constitutes a remote terminal from which the operator can perform all the operations which would be performed at the local control panels of the machines or at the interface of the control unit.

This allows the operator to enter a configuration parameter of a machine whilst it is positioned in another machine, for example so as to perform a manual adjustment on the latter.

This simplifies the configuration operations and reduces the probability of errors.

Further, according to another aspect of this description (in addition to or as an alternative to the presence of the portable control panel), each machine is designed to receive a corresponding control signal representing the setting data for the machine.

The supervision unit is configured for transmitting to the machines, automatically, corresponding control signals to configure them with the respective setting data.

This makes it possible to set up automatically, from the supervision unit, the recipe for the production of a certain type of product, configuring all the machines simultaneously, by means of control signals.

A database is also provided containing a plurality of types of products associated with corresponding recipes, that is, a plurality of data sets of the various machines of the line.

This allows the configuration of the machines to be simplified and speeded up, with reference to the parameters which can be entered using electrical signals.

According to another aspect of this description, the line comprises one or more sensors designed for generating a pattern signal representing a position of the products moving along the line (using the conveyor).

The supervision unit is connected to the sensor for receiving the pattern signal and it is configured for transmitting to the machines, in real time, corresponding control signals related to the products situated in the respective machines.

In other words, the supervision unit derives from the pattern signal the position of the individual products along the line, so that it knows that, at any given time, the k-th product is in the n-th machine, or it is approaching it. Consequently, the supervision unit controls, at that instant, the n-th machine with the setting data corresponding to the production recipe of the k-th product.

This allows a considerable flexibility of the line, which is able to manage a product which is different to the previous or subsequent product, with the possibility of managing small production batches simply and effectively and with relatively low costs.

In addition, this guarantees and facilitates synchronisation of the operations performed by the machine, which typically operate in series with respect to each other.

For example, this ensures that the colouring pattern of the colouring machine, in a line for the production of ceramic products, is coordinated and corresponding with a three-dimensional structure of the surface, made by the pressing machine and/or by a glazing machine positioned upstream of the colouring machine.

According to another aspect of the invention, the supervision unit is configured for monitoring diagnostic parameters (for example, machine alarms) or parameters relating to the consumption of the machine, during operation of the line.

This makes it possible to optimise the recipes as a function of optimisation parameters such as, for example, the energy consumption (in the case of ceramic product lines given also by the consumption of ink).

It should be noted that expression "production line for decorated ceramic products" means a line having one or more of the following machines: feeding machine, pressing machine, cutting machine (possibly integrated in the pressing machine as a cutting module), glazing machine, colouring machine, protective glazing machine, powdered glaze applying machine. According to another aspect of this invention, a line is provided comprising a design device for designing new types of products in a virtual environment.

It should be noted that the design device defines a design and development environment (virtual).

Preferably, but not necessarily, the design device is part of a production line.

The design device has a processor (for example, a computer processor). The design device comprises a memory containing a database defining a mathematical model of the operation of the line, having a plurality of model parameters. The mathematical model comprises suitable libraries and databases which can be updated. The model parameters are correlated with the setting (that is to say, configuration) parameters of the machines of the line. Examples of these parameters are, for example for a ceramic product line (for tiles), graphic files representing corresponding patterns, ink temperature, printing height determined by the position of nozzles, transit speed of products, colour code.

Preferably, the design device is equipped with a display unit for displaying an image of a product according to corresponding image data.

Moreover, preferably, the design device has an interface, connected to a computer, to allow the user to enter configuration parameters relative to corresponding features of the product. These features are, for example (the list which follows is shown by way of a non-limiting example): three-dimensional structure of the surface, texture (in the various gradations between shiny and opaque) both uniform and with graphical designs, and coloured images.

The computer is programmed for updating the image data as a function of the configuration parameters for displaying on the display unit a product having the features, and it is programmed for processing the configuration parameters as a function of the mathematical model, for generating setting data for the machines of the line, so that the line would produce a product with the features if the machines of the line were set up with the setting data generated by the device.

Moreover, the design device is designed to load digital documents containing image data representing a product having the desired aesthetic features; that digital document might have been previously generated using a graphics management program.

In that case, the design device is configured to take as input a 3D or 2D image and to convert it into a document containing the setting data of the machines, for making products in the line according to the image. Preferably, the design device makes it possible to display the product to be designed in a virtual environment, by means of graphical tools.

Thus, the design device facilitates and renders interactive the development of new products which can be made on the line.

The design device for is preferably, but not necessarily, configured for a line for the production of decorated ceramic products (for example, tiles). The design device allows the user to have a realistic video preview both of the decorative and chromatic aspects and of the appearance of the surface (three-dimensional structure and texture).

The design device represents the surface of the tile/slab as it will be at the end of the decorative operations performed in their entirety on the line; the user able to virtually rotate in space the object represented, for assessing the overall decorative effect (structure, colour, hues, shades, reflection of the surface).

The design device is able, knowing the nature and quantity of the substances applied by the various steps of the line (using the mathematical model), to simulate the appearance of the object and the interaction with the incident light of a virtual environment.

Every choice made by the user, for example in terms of design, colour, reflection and aspect of the surface, is interpreted by the design device , which converts this information into setting data for the various machines of the line; the data are, for example, in the form of graphical files, in colour or shades of grey, with regard to the various application techniques (for example, shades of grey for the glazing and the 3D structuring, with colours divided into different monochromatic channels for the high definition decorating).

One important opportunity offered by this technology is also carried into the commercial and marketing phase, by opening new scenarios for links between manufacturers of ceramic products and related clients.

In this regard, it should be noted that, typically, the retail system for ceramic products (whether they are tiles or slabs) normally involves the definition of a catalogue of products proposed by the manufacturer, from which the buyer (at sales and distribution outlets) may choose the floor or wall coverings, without having the chance to interact with the relative design step of the products.

The production flexibility provided by this invention makes it possible and inexpensive to make small batches, which can be extremely personalised, and even designed by the actual customer.

It should be noted that the solutions described in this specification are applied, preferably, to lines for the production of ceramic products such as, for example, tiles or slabs, but, more generally speaking, they also apply to other types of lines, such as, for example, bottling lines (production of parisons and containers, production of caps, and so on).

### Brief description of drawings

This and other features of the invention will become more apparent from the following detailed description of a preferred, non-limiting example embodiment of it, with reference to the accompanying drawings, in which:

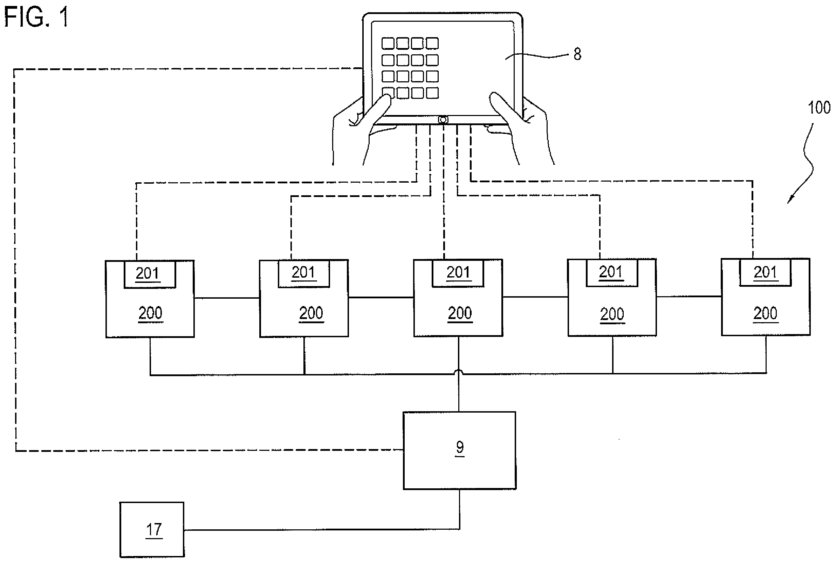

- Figure 1 schematically illustrates a production line according to the invention;
- Figure 2 illustrates the line of Figure 1, in particular for the production of decorated ceramic products;
- Figure 3 illustrates a detail of the line of Figure 1, comprising the device design.

### Detailed description of preferred embodiments of the invention

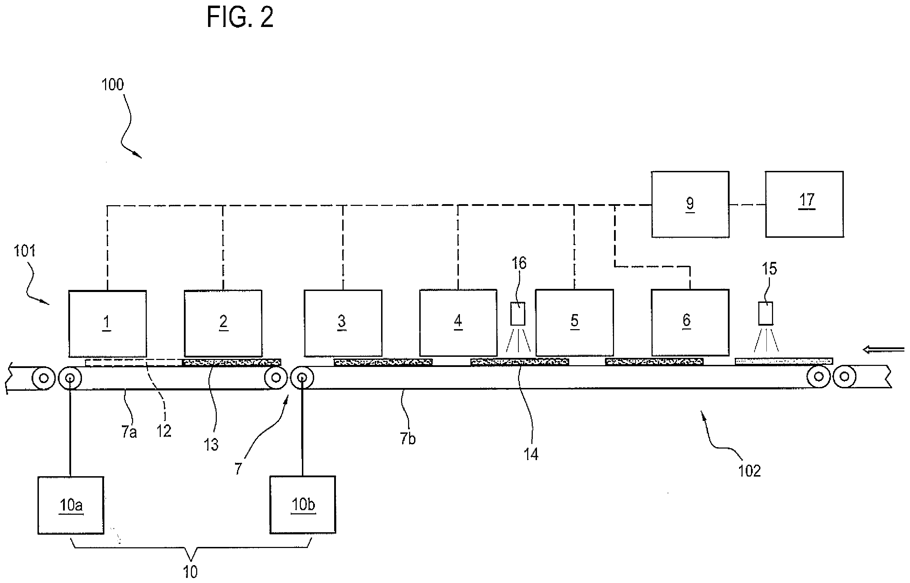

With reference to Figure 2, the numeral 100 denotes a line for the production of decorated ceramic products in a continuous cycle, according to this invention.

The line 100 comprises a feeding machine 1 configured for placing on a conveyor 7 ceramic powder 12 according to a predetermined placing pattern. Preferably, the feeding machine 1 comprises one or more Digital Dry Decoration machines. An example of a digital dry decoration machine is given in patent document WO2013045989, by the same Applicant. The digital dry decoration machine releases small quantities of atomised dry powder, granulated or micronized, with a predetermined colour, preferably using a plurality of piezoelectric-controlled vibratory micro-dosers.

The feeding machine 1 is designed to receive signals from a control unit 9. The signals determine the pattern for placing the ceramic powder 12 on the first conveyor 7. Preferably, the ceramic powder 12 are placed according to a profile determined from an image contained in a memory of the control unit 9. Preferably, the image is associated uniquely to a ceramic product being processed.

In one particular embodiment, the one or more digital dry decoration machines are preceded by mass loading systems, configured for placing a base layer of ceramic powder, on which coloured ceramic powders are then placed.

The line 100 comprises a pressing machine 2 configured for compacting the ceramic powder 12, placed by the feeding machine 1, to make a slab 13 of ceramic material having a surface.

Preferably, the pressing machine 2 is a discontinuous press with a hydraulic drive system or a continuous compacting belt machine. An example of a discontinuous press with a hydraulic drive system is given in patent document EP0894589, by the same Applicant. An example of a continuous compacting belt machine is given in patent document EP1283097, by the same Applicant. The surface of the slab 13 of ceramic material can be smooth or structured, depending on the desired type of ceramic product.

Preferably, the pressing machine 2 is equipped with a cutting module configured for separating a slab 13 of ceramic material made by compacting the powder placed by the feeding machine 1, for making a plurality of ceramic products 14, each having a surface. Preferably, the pressing machine 2 is equipped with a distributor module, configured for placing the ceramic products 14 of the plurality on the conveyor 7 individually, according to a predetermined sequence.

It should be noted that the function for cutting the plates may be assigned to a cutting machine independent from the pressing machine 2, positioned downstream of the latter. For example, the cutting machine may be positioned immediately downstream of the pressing machine 2, or also downstream of the glazing machines, or also downstream of further stations designed for baking the ceramic products.

Preferably, the machine 100 comprises a glazing machine 3, configured for placing liquid material on the surface of the ceramic product 14, according to a predetermined glazing pattern. Preferably, the glazing machine 3 is a machine for decorating with a jet of liquid material, with piezoelectric control. Preferably, the glazing machine 3 comprises heads according to patent EP2085225B1. The glazing machine 3 is able to apply large quantities of liquid glaze (on average, from 50 to 500 g/m2 and above).

The structure and the materials of the heads allow the glazing machine 3 to eject droplets of liquid material (for example with dimensions of between 50 and 200 nl) from a plurality of nozzles limiting problems of blockage and wear of the nozzles. Preferably the heads are equipped with an integrated cleaning system, such as for example described in patent document EP2085225B1, by the same Applicant.

Preferably, the glazing machine 3 is configured for achieving a homogeneous covering on the entire surface of the ceramic product 14 or for applying the liquid material on certain areas of the surface of the ceramic product 14, in a selective manner, according to an electronically predetermined and controlled pattern.

Preferably, the glazing machine 3 is configured for making a structure in relief, placing more or less large quantities of liquid material on the different zones of the surface of the ceramic product 14.

The glazes used by the glazing machine 3 comprise, for example, water-based ceramic suspensions (for example, characterised by a density greater than or equal to 1500 g/dm³), with percentages of solids of more than 50% (by weight) and dimensions of the particulate greater than or equal to 10µm. The final appearance of the glazes may be transparent or opaque, shiny or satin-finish, and if necessary, coloured as a function of a coloured pigment inserted in the composition.

In order to structure the surface it is possible to adopt, for example, the same mixture of raw mineral materials as a pressed base filler, in such a way as to favour the adhesion and the dilatometric agreement during baking.

The line 100 comprises a colouring machine 4 equipped with printing heads connected to an ink circuit. The colouring machine 4 is configured for applying the ink to the surface of the ceramic product 14, according to a predetermined colouring pattern. Preferably, the colouring machine 4 is digital, and it is equipped with high resolution printing heads, with piezoelectric control.

Preferably, the colouring machine 4 is equipped with a plurality of print bars (preferably from four to eight). Each print bar is dedicated to a different primary colour, to form a very wide spectrum of colours by the combination of drops of ink of primary colours.

In one embodiment, the colouring machine 4 is configured for placing non-standard "colours", such as spot shades (predominant colour in the subject to be printed) or even white or transparent. Generally speaking, the machine has a number of colours (bars of colour) greater than that used for each product (for example 8 bars in total but only 4-5 in use) in such a way as to select the best base colours as a function of the graphical design and the predominant colours.

The quantity of ceramic ink placed by the colouring machine 4 is less than the quantity placed by the glazing machine 3, and is, for example, between 5 and 50 g/m².

The application of the coloured graphical pattern in step 4 can be synchronised with the previous steps, achieving an attractive overall appearance.

Preferably, the glazing machine 3 is positioned between the pressing machine 2 and the colouring machine 4.

The line 100 comprises a protective glazing machine 5 configured to apply a protective glaze to the surface of the ceramic product 14 according to a protective predetermined glazing pattern. Preferably, the protective glazing machine 5 is positioned downstream of the colouring machine 4. Preferably, the protective glazing machine 5 is a machine for decorating with a jet of liquid material, with piezoelectric control. Preferably, the protective glazing machine 5 is configured for achieving a homogeneous covering on the entire surface of the ceramic product 14 or for applying the liquid material on certain areas of the surface of the ceramic product 14, in a selective manner, according to an electronically predetermined and controlled pattern.

Preferably, the protective glazing machine 5 places on the surface large quantities of liquid glaze (for example, between 50 and 500 g/m²). The liquid glaze generally has characteristics different from that used by the glazing machine 3, for example they are products which are transparent, more or less shiny, or with a metallic appearance, or capable of giving the surface of the product particular visual effects (brightness, opacity, etc.), after the baking. Preferably the liquid glazes placed by the protective glazing machines have functional characteristics, and are capable of increasing the degree of resistance of the slab 13 (or the ceramic product 14) to wear and chemical agents.

In the embodiment illustrated, the line 100 comprises a powdered glaze applying machine 6, positioned downstream of the colouring machine 4, and configured for applying powdered glaze to the surface of the ceramic product 14 according to a predetermined powdered glaze applying pattern. Preferably, the powdered glaze applying machine 6 is a digital dry decoration machine, which allows the selective application of powder by digital means, according to a predetermined powdered glazing pattern. The powder may be, for example, grains of enamel, glass and other materials which are intended to cover all or part of the surface. The decorative effect is different from the one obtained by the protective glazing machine 5 and it is complementary to it.

The line 100 comprises at least one sensor 10 for generating a pattern signal representing a position of the ceramic products moving along the line 100 using the conveyor 7. Preferably, the sensor 10 is an encoder system.

The line 100 also comprises a supervision unit 9 connected to the at least one sensor 10, to receive the pattern signal.

The feeding machine 1 is designed to receive a first control signal. The pattern for placing the ceramic powder 12 is a function of the first control signal.

The colouring machine 4 is designed to receive a second control signal. The colouring pattern of the ceramic product 14 is a function of the second control signal.

The supervision unit 9 is connected to the feeding machine 1 and to the colouring machine 4 for transmitting to them in real time the first and second control signal, respectively, related to the ceramic products situated in the respective machines.

Preferably, the glazing machine 3 is designed to receive a third control signal. Preferably, the supervision unit 9 is connected to the glazing machine 3 for transmitting the third control signal which determines the glazing pattern of the ceramic product 14.

Preferably, the protective glazing machine 5 is designed to receive a fourth control signal. Preferably, the supervision unit 9 is connected to the protective glazing machine 5 for transmitting the fourth control signal which determines the protective glazing pattern.

Preferably, the powdered glaze applying machine 6 is designed to receive a fifth control signal. Preferably, the supervision unit 9 is connected to the powdered glaze applying machine 6 for transmitting the fifth control signal which determines the powdered glaze applying pattern.

Preferably, the line 100 comprises a first conveyor 7a and a second conveyor 7b. Preferably, the line 100 comprises a first sensor 10a and a second sensor 10b for generating a pattern signal representing a position of the ceramic products moving along the line 100 using the first conveyor 7a and the second conveyor 7b, respectively.

Preferably, the line 100 is divided into a first operating unit 101 (that is, forming unit 101), comprising the feeding machine 1 and the pressing machine 2, and in a second operating unit 100b (that is, decorating unit 102) comprising the colouring machine 4. Preferably, the second operating unit also comprises the glazing machine 3, the protective glazing machine 5 and the powdered glaze applying machine 6. Preferably, the first operating unit 101 comprises the first conveyor 7a and the second operating unit 102 comprises the second conveyor 7b.

Preferably, the supervision unit 9 is programmed for acquiring and storing, for one or more of the machines of the line 100, parameters relative to the energy consumption of the machines and/or signals relating to alarms activated in the machines, for generating an archive representing a trend of the parameters for at least one period of time of production of the line 100.

Preferably, the supervision unit 9 is programmed for generating an operating table having a plurality of cells. In one particular embodiment, the operating table has a plurality of records in ordered succession, corresponding to a succession of decorated ceramic products 14 to be made. The operating table also has a plurality of columns, relative to corresponding machines of the line 100. The cells of the operating table contain data relative to the control signals relating to the corresponding ceramic products 14 to be made and to the corresponding machines of the line 100. The supervision unit 9 is programmed for selecting in real time the records and the columns of the operating table as a function of the pattern signal, and transmitting to the machines the respective control signals.

Preferably, the supervision unit is programmed for automatically acquiring from one or more of the machines of the line 100 a data set for configuring the machine. Preferably, the supervision unit 9 is programmed for acquiring and storing, for one or more of the machines of the line 100, variations of the data set for configuring the machine, in a period of time of operation of the line 100.

In the embodiment illustrated, the line 100 comprises a first video camera 15, positioned downstream of the powdered glaze applying machine 6 and a second video camera 16, positioned downstream of the colouring machine 4. The video cameras 15, 16 are configured for capturing images of the surface of the ceramic products 14 in transit along the line 100.

The supervision unit 9 is connected to the video cameras 15, 16 for capturing the images and processing them for generating one or more control signals. The control signals allow for adjusting the operation of one or more of the machines located upstream of a monitoring position, as a function of the processing of the images.

Preferably, the control signal coming from the second video camera 16, positioned downstream of the colouring machine 4, comprises values of one or more of the following parameters: supply voltage of one or more of the printing heads and negative pressure in the ink circuit of the colouring machine 4.

Preferably, the images captured by the video cameras 15, 16 are processed by the supervision unit 9 in real time and assessed as a function of predetermined conformity criteria. If the conformity criteria are not complied with, the slab 13 (or the ceramic product 14) will be reported to an operator and, if necessary, automatically rejected at the outfeed of the line 100.

Preferably, the first video camera 15, located at a point for monitoring the line downstream of the colouring machine, is configured for capturing images of the surface of the ceramic products 14 (or of the slabs 13) in transit along the line 100, and is connected to the supervision unit 9. The supervision unit 9 processes the images to drive a device for evacuating ceramic products 14 (or slabs 13) positioned downstream of the first video camera 15 and upstream of stations for baking the ceramic products 14 (or slabs 13).

Preferably, the video cameras 15, 16 are equipped with measuring devices configured for performing other functions such as, for example:
- dynamic weighing of the slab 13 (or the ceramic product 14) for assessing the quantity of glaze applied (in particular downstream of the glazing machine 3 and the protective glazing machine 5);
- determining the humidity and/or the temperature of the surface.

The invention also provides a method for the production of decorated ceramic products in a continuous cycle.

The method comprises a step for placing on a conveyor, using a feeding machine, ceramic powder according to a placing pattern, as a function of a first control signal.

Moreover, the method comprises a step for pressing the ceramic powder for compacting it to make ceramic products having a surface.

The method also comprises a step for colouring, in a colouring machine using printing heads connected to an ink circuit, the surface of the ceramic products, according to a colouring pattern as a function of a second control signal,

A position detection system, for example comprising sensors, generates a pattern signal representing a position of the ceramic products moving along the line.

Moreover, the method comprises a step for transmitting in real time, from the supervision unit to the feeding machine and colouring machine, the first and second control signal, respectively, related to the ceramic products situated in the respective machines.

The expression "in real time" means that the transmission occurs during the operation of the line, without interrupting (and preferably without slowing down) the production process.

Preferably, the method also comprises a step for presenting to a user a list representing a plurality of types of decorated ceramic products, to allow the user to select one.

Moreover, there is a step for preparing a database comprising a plurality of cells identified by a plurality of records, relative to the plurality of types of decorated ceramic products, and a plurality of columns relative to corresponding machines of a line of machines comprising at least the feeding machine and the colouring machine, wherein the cells of the database contain setting data for the machines, to make the corresponding type of product.

The table comprises a digital document, in any format.

Next, the user selects, from the database, the record of cells corresponding to the type of ceramic product selected by the user.

The supervision unit sets up the machines of the line, in particular (according to a list provided by way of example only, without necessarily being exhaustive) the feeding machine and the colouring machine, using control signals containing the setting data of the corresponding cells of the record selected.

Preferably, the method comprises a step of acquiring and storing, during production of the ceramic products, a data set for configuring one or more machines of a plurality of machines connected in the line for the production of ceramic products.

Preferably, the method comprises a step of acquiring and storing, during the production of ceramic products using a plurality of machines in line, parameters relative to an energy consumption of the machines and/or signals relating to alarms activated in the machines.

Moreover, preferably, an archive is generated representing a trend of the parameters for at least one period of time of production of the line.

The method also comprises, preferably, capturing images of the surface of the ceramic products in transit along the line, for example using at least one video camera (or other vision systems) positioned at a monitoring point of the line.

The supervision unit captures the images and then processes them. More specifically, the supervision unit generates one or more control signals for adjusting the operation of one or more of the machines upstream of the monitoring point as a function of the images processed.

With reference to Figure 2, the numeral 100 denotes a line for the production of individual products in succession in a continuous cycle.

The line might be a line for the production of ceramic products of the type described above, or a beverage line, or a line for the production of different objects, of any type.

The line 100 comprises a plurality of machines 200 interconnected, for example, by one or more conveyors, according to a predetermined sequence.

Each machine 200, or at least some of the machines 200 of the plurality, has a local control panel 201. Preferably, the local control panel 201 is positioned on the machine. The local control panel 201 defines an interface for allowing a user to configure the machine 200 with setting data for the machine.

The line 100 also comprises the supervision unit 9; the supervision unit 9 is connected to the machines 200 (preferably those equipped with control panel 201, more preferably all the machines 200).

The supervision unit 9 is designed to receive and transmit data from and to the machines 200, according to a monitoring activity of the machines 200 (for example, as described above with regard to the ceramic line, or any other control, monitoring, setting up or inspection activity).

Preferably, the supervision unit 9 has a relative user interface (for example, a display unit of a computer).

The line 100 comprises at least one portable control panel 8; preferably it comprises a plurality.

The portable control panel 8 is, for example, a tablet, a smart phone, or another electronic device.

The portable control panel 8 has a display unit and a user interface; the interface could be defined by the same display unit, with a touch screen technology of known type.

The portable control panel 8 has a connection module, for putting the portable control panel in wireless communication with all the local control panels of the machines of the line and with the supervision unit. Moreover, the portable control panel 8 has a processor. The word "processor" is used to mean in general an electronic element which is designed to perform processing, that is, operations; it may be achieved using a PC or a part of a PC, by a PLC, or by other electronic tools (hardware or software) of a *per se* known type.

The processor is programmed for displaying on the display unit the interface of the local control panels of each machine, for allowing the user to configure the machine with the setting data, from a remote position using the portable control panel.

Preferably, the portable control panel 8 is configured for displaying on the display unit the interface of the supervision unit, for allowing the user to manage the supervision activities from a remote position using the portable control panel.

Each machine 200 (equipped with portable control panel 201) has a local control unit (hereinafter also referred to as electronic control card); the local control unit may comprise hardware or software, for example a PLC, a computer or a suitably programmed CPU, or other prior art solutions.

It should be noted that the line has a system for management of the accesses to the control cards of the machines 200. The control system is implemented in the relative control cards of the machines 200, as well as in the supervision unit and in the portable control panel.

This system of controlling the accesses consists of various control stations (local or remote access points). Each control station (local control unit or portable panel or supervision unit) may be enabled for data reading and/or writing. The access for reading is always permitted after inserting credentials giving access to the system by the user. The access for writing is only permitted for one station at a time. To request access, a station must make a request to the other stations using a request signal. The request may be accepted or refused by the station having control. If, after a predetermined time, the request is not processed, the control passes automatically to the applicant. The station present on the machine (local access point comprising local control unit) has the possibility of forcing the control request, irrespective of the others.

More specifically, each control card (that is, local unit) is programmed to allow the machine to be configured from a single access point at a time.

Possible access points are the local control panel of the machine 200, the portable control panel (or panels) 8, or the supervision unit 9 (the last two are remote access points).

Preferably, the control card of each machine 200 is programmed to assign, in the presence of a control request from more than one access point simultaneously, the control to the local control panel 8.

The control card of each machine 200 is programmed to activate a timer for a predetermined interval of time, in response to a control request from a remote access point (comprising the portable control panel 8 or the supervision unit 9).

The control card of each machine 200 is programmed to deny the control, if a command to deny authorisation is set using the local control panel 8 within the predetermined time interval (by a user present on the machine). Vice versa, the control card of each machine 200 is programmed for assigning the control to the remote access point, if an authorisation command is set using the local control panel within the predetermined time interval, or if the predetermined time interval ends without any command for authorisation or denial being set using the local control panel 8 (in the latter case, it is possible that no operator is present on the machine). Preferably, the processor of the portable control panel is programmed to allow a display of any interface of the local control panels 8 or of the control unit, in a display mode in which the user is not permitted to configure the machines 200 with the setting data.

Preferably, the machines 200 (or some of them) are designed to receive corresponding control signals, representing the setting data for the respective machines.

The supervision unit 9, preferably, is configured for transmitting to the machines 200, automatically (and preferably simultaneously), corresponding control signals to configure them with the respective setting data.

Preferably, the line 100 comprising at least one sensor, for generating a pattern signal representing a position of the products moving along the line using the conveyor.

The supervision unit 9 is connected to the at least one sensor to receive the pattern signal, to know in real time the position of the products along the line and to trace each individual product.

The supervision unit 9 is configured for transmitting to the machines 200, in real time, corresponding control signals related to the products situated in the respective machines.

According to one embodiment, the line 100 is a line for the production of decorated ceramic products in a continuous cycle, as described above. According to another embodiment (not illustrated), the line 100 is a line for bottling containers (preferably, but not necessarily made of thermoplastic material) in a continuous cycle.

The bottling line comprises one or more of the following machines:
- a moulding unit for making parisons of thermoplastic material from the thermoplastic material in its raw form;
- a parison thermal conditioning unit configured to receive the parisons from the moulding unit and to heat and cool the parisons;
- a blow-moulding unit configured to receive the heated parisons from the conditioning unit and to blow-mould them into the moulds in such a way as to make containers designed to be filled;
- a filling unit configured to receive the containers from the blow-moulding unit and to fill them with liquid or semi-liquid food products;
- a moulding unit for making caps of plastic material from the plastic material in its raw form;
- a capping unit configured to receive the caps from the cap moulding unit and to apply the caps securely to respective full containers.

Moreover, preferably, the bottling line comprises a storage system configured to contain the parisons and/or caps and/or containers and connected to one or more of the other machines of the line to receive products to be stored and to feed the other machines with products stored previously.

The invention also provides a method for the production of individual products in succession in a continuous cycle in the line 100.

The method comprises preparing at least one portable control panel 8, comprising a display unit and an interface for the user.

The portable control panel 8 is configured for communicating in a wireless fashion with the local control panels 8 of the machines of the line.

The method comprises displaying on the display unit of the portable control panel 8 the interface of the local control panels 201 of one of the machine of the line, selected by the user.

For this reason, the portable control panel 8 makes it possible to remotely configure each machine 200, entering corresponding setting data.

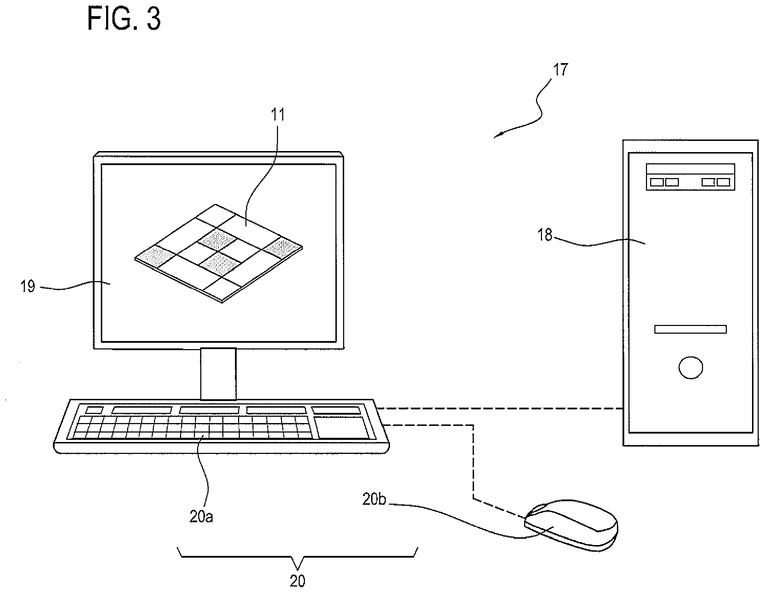

With reference to Figure 3, attention is drawn to the following.

According to another aspect of this invention, a device 17 is provided for designing a product, that is, a type of product (preferably, but not necessarily, a decorated ceramic product) which can be made in a line 100 for the production of (individual) products (in succession) in a continuous cycle.

The line 100 is preferably a line comprising a plurality of machines interconnected by one or more conveyors according to a predetermined sequence (preferably as described above regarding a generic line and/or a ceramic line). The line 100 comprises a supervision unit 9 connected to the machines of the line (preferably as described above). The design device 17 may be part of the line 100 or can constitute a separate, autonomous, entity.

The design device 17 comprises a memory, for example forming part of a computer 18, containing a database defining a mathematical model of the operation of the line, having a plurality of model parameters.

Preferably, the design device 17 has a display unit 19, to display an image of a product according to corresponding image data.

The design device 17 has a processor, for example forming part of a computer 18.

Moreover, the design device 17 has an interface 20 (for example a keyboard 20a and/or a mouse 20b) connected to the computer to allow the user to set configuration parameters relative to corresponding features of the product to be produced.

The computer is programmed for updating the image data as a function of the configuration parameters for displaying on the display unit a product having the features.

The computer is programmed for processing the configuration parameters as a function of the mathematical model, for generating setting data for the machines 200 of the line, so that the line 100 produces a product with the features when the machines of the line are set up with the setting data generated.

Hereinafter, the description refers in particular to the design device 17 for decorated ceramic products, that is, for a line for the production of decorated ceramic products.

As described above, the line comprises:
- a feeding machine configured for placing on a conveyor ceramic powder according to a placing pattern, as a function of setting data of the feeding machine;
- a pressing machine configured for compacting the powder placed by the feeding machine for making ceramic products having a surface, as a function of setting data of the pressing machine;
- a colouring machine equipped with printing heads connected to an ink circuit, configured for applying the ink to the surface of the ceramic product according to a colouring pattern, as a function of the setting data of the colouring machine.

The design device 17 is, preferably, programmed to perform a succession of iterations.

Each iteration comprises a simulation of the operation of the line 100, as a function of a configuration set for the model parameters.

At the time of the first iteration, the model parameters are set at an initial configuration, as a function of the configuration parameters entered by the user (for example, the initial configuration is determined by neural networks or other artificial intelligence tools applied to the configuration parameters entered by the user).

Moreover, each iteration comprises a comparison of the features of the ceramic product resulting from the simulation and the features of the ceramic product corresponding to the configuration parameters set by the user.

The computer is programmed for updating the model parameters for the subsequent iteration, as a function of the comparison.

The computer is programmed for deriving the setting data for the machines 200 (this means also the specific machines of the ceramic product line described above) of the line 100 as a function of the model parameters entered in one of the iterations, preferably in the last iteration. Preferably, the computer of the design device 17 is programmed to perform a simulation of the operation of the line 100 as a function of the mathematical model for calculating, for one or more of the machines 200 of the line, parameters relating to an energy consumption of the machines in the simulated operation, to estimate a consumption of the line for the production of a predetermined ceramic product.

Preferably, the computer of the design device 17 is programmed to perform a succession of iterations, wherein each iteration comprises the simulation of the operation of the line 100 with a configuration of model parameters varied relative to the previous iteration, and it is programmed to compare the consumptions estimated in the various iterations, in order to optimise the setting data of the machines 200 of the line as a function of the consumption of the line.

In a preferred embodiment, the design device 17 is connected to the line 100 (by the supervision unit 9, for example) for receiving data relating to ceramic products 14 actually made (with the machines of the line 100 set according to the setting data generated by the design device 17) from the line 100. This allows to obtain a control feedback between the image of the desired product, made available by the design device 17, and the product actually (and physically) obtained from the line 100.

Such data relating to ceramic products 14 transmitted from the line 100 (for example, by the supervision unit 9) to the design device 17 include, for example, parameters relating to shades of color, to a structure distribution, to an amplitude of recesses and reliefs (of ceramic products 14).

Such data relating to ceramic products 14 transmitted from the line 100 (for example, by the supervision unit 9) to the design device 17 include design data detected by one of said video cameras 15, 16 of the line 100 and preferably from the first video camera 15.

In this light, one or more images detected by the first video camera 15 (or by another of said video cameras 15,16) is transmitted to the design device 17, which is configured to compare the received images (reference images) with the image corresponding to the setting data generated by the design device 17.

According to an embodiment, the design device 17 is programmed to perform one or more iterations, as a function of this comparison, to update the setting data. Therefore, the design device 17 is configured to change the setting data (as control feedback, for example by means of an iterative process), as a function of said comparison.

In this regard, note also that the design device 17 is programmed to activate a self-learning mode, as a function of said comparison (or as a function of the feedback received from the line 100), to update the database defining the mathematical model of the line operation as a function of an error between the desired image (which, on the basis of the model, it is assumed to correspond to the products made with the configuration of model parameters generated, i.e. the parameters of the last iteration) and the real image of the product made from the line 100 (for example, detected by the first video camera 15), set with the recipe corresponding to said configuration of model parameters of the last iteration.

According to an embodiment, these image processing functions and comparisons, together with the update of the machine setting data, can be implemented in whole or in part by the supervision unit 9, as an alterative or in addition to the design device 17.

In this way, the line 100 provides a synergistic interaction between the supervision unit 9, the video cameras 15,16 (for example, the first video camera 15) and the design device 17, to provide a criterion and a strategy to achieve a quality control (possibly and preferably in the form of a real-time control), with the possibility to transmit the images recorded by the video cameras 15,16 to the supervision unit 9 (and the design device 17) for an automatic feedback correction of the recipes (i.e. the setting data of the machines of the line 100).This invention also provides a method for designing products (preferably decorated ceramic products) which can be made in a line 100 (preferably made according to one or more of the features described above).

The design method can be a separate method or a method forming part of the method for making products (preferably decorated ceramic products). The design method comprises the following steps:
- preparing a mathematical model of the operation of the line, having a plurality of model parameters;
- displaying an image of a product according to corresponding image data;
- receiving, by a computer through an interface, configuration parameters relative to corresponding features of the product;
- updating the image data as a function of the configuration parameters and displaying an image of a product having the features;
- processing the configuration parameters as a function of the mathematical model and generating setting data for the machines of the line, so that the line produces a product with the features when the machines of the line are set up with the setting data generated.

According to an embodiment, the setting data of the machines generated by the design method are transmitted (directly) to the supervision unit 9, so that the latter transmits them to the individual machines of the line by means of corresponding control signals.

Preferably, the design method comprises a succession of iterations, wherein each iteration comprises the following steps:
- simulating the operation of the line as a function of a configuration of the model parameters;
- comparing the features of the product resulting from the simulation and the features of the product corresponding to the configuration parameters set up by the user;
- updating the model parameters for the subsequent iteration, as a function of the comparison.

The generation of the setting data of the machines comprises deriving the data from the model parameters set up in one of the iterations.

Preferably, the design method comprises the following steps:
- simulating the operation of the line as a function of the mathematical model set up for making a predetermined product;
- calculating parameters, for one or more of the machines of the line, relating to the energy consumption of the machine in the simulated operation;
- deriving an estimated consumption of the line for the production of predetermined decorated ceramic product.

The invention also provides a computer program comprising software for performing the steps according to the method design (according to one or more of the features described above), if launched on the line 100 for the production of products (according to one or more of the features described above regarding the generic line or the ceramic line in particular).

The invention also provides computer readable storage medium, comprising the above-mentioned computer program.

## Claims

1. A line (100) for the production of products in succession, comprising:
- a plurality of machines (200) interconnected by one or more conveyors (7) according to a predetermined sequence;
- for each machine (200), a local control panel (201) positioned on the machine (200) and forming an interface to allow a user to configure the machine (200) with setting data for that machine (200);
- a supervision unit (9) connected to the machines (200) of the line (100) to receive and transmit data, thus defining an activity for monitoring machines (200), and having a respective interface for the user;
-- at least one portable control panel (8), which includes:
- a display unit;
- a user interface;
- a connection module, for putting the portable control panel (8) in wireless communication with all the local control panels (201) of the machines (200) of the line (100) and with the supervision unit (9);
- a processor programmed for displaying on the display unit the interface of the local control panels (201) of each machine (200), for allowing the user to configure the machine (200) with the setting data, from a remote position using the portable control panel (8),
the line (100) being **characterized in that** each machine (200) further includes a local control unit, which is programmed to allow the machine (200) to be configured from a single access point at a time, wherein the local control panel (201) of the machine (200), the at least one portable control panel (8) and the supervision unit (9) provide possible access points,
wherein each local control unit is programmed to activate a timer for a predetermined interval of time, in response to a control request from the portable control panel (8) or from the supervision unit (9), and is programmed to deny the control, in response to a command to deny authorisation set through the local control panel (8) within the predetermined time interval, and is programmed for assigning the control to the portable control panel (8) or to the supervision unit (9), in response to
i) a command to accept authorisation set through the local control panel (201) within the predetermined time interval, or
ii) an absence of any command to accept or deny authorisation set through the local control panel (8) in the predetermined time interval.

2. The line (100) according to claim 1, wherein the portable control panel (8) is configured for displaying on the display unit the interface of the supervision unit (9), for allowing the user to manage the supervision activities from a remote position using the portable control panel (8).

3. The line (100) according to claim 1 or 2, wherein each machine (200) has a local control unit programmed to allow the machine (200) to be configured from a single access point at a time, wherein the access point is, alternatively, the local control panel (201) of that machine (200), the at least one portable control panel (8), or the supervision unit (9).

4. The line (100) according to claim 3, wherein the local control unit of each machine is programmed to assign, in the presence of a control request from more than one access point simultaneously including the local access point, the control to the local control panel (8).

5. The line (100) according to any one of claims 2 to 4, wherein the local control unit of each machine (200) is programmed to allow the user to grant or deny the control from a remote access point, in response to a control request from the remote access point, using the local control panel (201) of the machine (200).

6. The line (100) according to any one of the preceding claims, wherein the processor of the portable control panel (8) is programmed to allow a display of any interface of the local control panels (201) or of the control unit, in a display mode in which the user is not permitted to configure the machines (200) with the setting data.

7. The line according to any one of the preceding claims, comprising at least one tablet or smart phone or portable PC, defining the at least one portable control panel (8).

8. The line (100) according to any one of the preceding claims, wherein each machine (200) is designed to receive a corresponding control signal representing the setting data for the machine (200), and wherein the supervision unit (9) is configured for transmitting to the machines (200), automatically, corresponding control signals for configuring it with the respective setting data.

9. The line (100) according to any one of the preceding claims, comprising at least one sensor (10) for generating a pattern signal representing a position of the products moving along the line through the machines (200) and the conveyor (7), wherein the supervision unit (9) is connected to the at least one sensor (10) for receiving the pattern signal and it is configured for transmitting to the machines (200) in real time corresponding control signals related to the products situated in the respective machines (200).

10. The line (100) according to any one of the preceding claims, wherein the line (100) is a line (100) for the production of decorated ceramic products in a continuous cycle, comprising one or more of the following machines:
- a feeding machine (1) configured for placing on a conveyor (7) ceramic powder (12) according to a placing pattern, as a function of setting data of the feeding machine (1);
- a pressing machine (2) configured for compacting the powder (12) placed by the feeding machine (1) for making ceramic products having a surface, as a function of setting data of the pressing machine (2);
- a colouring machine (4) equipped with printing heads connected to an ink circuit, configured for applying the ink to the surface of the ceramic product according to a colouring pattern, as a function of the setting data of the colouring machine (4).

11. The line (100) according to claim 10, further comprising one or more of the following machines:
- a glazing machine (3), positioned between the pressing machine (2) and the colouring machine (4), configured for placing liquid material on the surface of the ceramic product, according to a glazing pattern as a function of setting data of the glazing machine (3);
- protective glazing machine (5), positioned downstream of the colouring machine (4), and configured for applying a protective glaze to the surface of the ceramic product coloured by the colouring machine (4), according to a protective glazing pattern as a function of setting data of the protective glazing machine (5);
- powdered glaze applying machine (6), positioned downstream of the colouring machine (4) and configured for applying powdered glaze to the surface of the ceramic product coloured by the colouring machine (4) according to a powdered glaze applying pattern, as a function of setting data of the powdered glaze applying machine (6).

12. The line (100) according to any one of claims 1 to 9, wherein the line (100) is a line for bottling in a continuous cycle containers made of thermoplastic material, comprising one or more of the following machines:
- a moulding unit for making parisons of thermoplastic material from the thermoplastic material in its raw form;
- a parison thermal conditioning unit configured to receive the parisons from the moulding unit and to heat and cool the parisons;
- a blow-moulding unit configured to receive the heated parisons from the conditioning unit and to blow-mould them into the moulds in such a way as to make containers designed to be filled;
- a filling unit configured to receive the containers from the blow-moulding unit and to fill them with liquid or semi-liquid food products;
- a moulding unit for making caps of plastic material from the plastic material in its raw form;
- a capping unit configured to receive the caps from the cap moulding unit and to apply the caps securely to respective full containers.

13. The line (100) according to claim 12, further comprising a storage system configured to contain the parisons and/or caps and/or containers and connected to one or more of the other machines of the line (100) to receive products to be stored and to feed the other machines with products stored previously.

14. The line (100) according to any one of the preceding claims, comprising a design device (17) having:
- a memory containing a database defining a mathematical model of the operation of the line having a plurality of model parameters;
- a display unit (19) for displaying an image (11) of a product according to corresponding image data;
- an interface (20) connected to a computer (18) to allow the user to enter configuration parameters relative to corresponding features of the product, wherein the computer (18) is programmed for updating the image data as a function of the configuration parameters for displaying on the display unit (19) a product having the features, and it is programmed for processing the configuration parameters as a function of the mathematical model, for generating setting data for the machines (200) of the line (100), so that the line (100) produces a product with the features when the machines (200) of the line (100) are set up with the setting data generated.

15. A method for the production of individual products in succession in a continuous cycle in a line (100) having a plurality of machines (200) interconnected by one or more conveyors (7) according to a predetermined sequence; wherein each machine (200) has a local control panel (201) positioned on the machine (200) and forming an interface to allow a user to configure the machine (200) with setting data for that machine (200), comprising the following steps:
- preparing at least one portable control panel (8),comprising a display unit and an interface for the user, and in wireless communication with all the local control panels (201) of the machines (200) of the line (100);
- displaying on the display unit of the portable control panel (8) the interface of the local control panels (201) of one of the machine (200) of the line (100), selected by the user;
- configuring the machine (200) with corresponding setting data, from a remote position using the portable control panel (8),
the method being **characterized in that**
each machine (200) further includes a local control unit, which is programmed to allow the machine (200) to be configured from a single access point at a time, wherein the local control panel (201) of the machine (200), the at least one portable control panel (8) and the supervision unit (9) provide possible access points,
and **in that** the method comprises the following steps, which can be performed by each local control unit:
- activating a timer for a predetermined interval of time, in response to a control request coming from the portable control panel (8) or from the supervision unit (9);
- denying the control, if a command to deny authorisation is set through the local control panel (8) within the predetermined time interval;
- assigning the control to the control panel (8) or from the supervision unit (9), if either of the following events occurs
i) a command to accept authorisation is set through the local control panel (201) within the predetermined time interval, or
ii) the predetermined time interval ends without any command to accept or deny authorisation being sent through the local control panel (8) in the predetermined time interval.

## Patentansprüche

1. Fertigungsstraße (100) zur aufeinanderfolgenden Herstellung von Produkten, umfassend:
- eine Vielzahl von Maschinen (200) die durch einen oder mehrere Förderer (7) nach einer vorgegebenen Abfolge miteinander verbunden sind;
- für eine jede Maschine (200) ein lokales Bediengerät (201), das auf der Maschine (200) positioniert ist und eine Schnittstelle formt, um einem Nutzer zu erlauben, die Maschine (200) mit Einstelldaten für diese Maschine (200) zu konfigurieren;
- eine Überwachungseinheit (9), die an die Maschinen (200) der Fertigungsstraße (100) angeschlossen ist, um Daten zu empfangen und zu senden, sodass eine Tätigkeit zur Überwachung von Maschinen (200) definiert wird, aufweisend eine jeweilige Schnittstelle für den Nutzer;
- mindestens ein tragbares Bediengerät (8), das Folgendes beinhaltet:
- eine Anzeigeeinheit;
- eine Benutzerschnittstelle;
- ein Verbindungsmodul, um eine drahtlose Verbindung des tragbaren Bediengeräts (8) mit allen lokalen Bediengeräten (201) der Maschinen (200) der Fertigungsstraße (100) und mit der Überwachungseinheit (9) herzustellen;
- einen Prozessor, der programmiert ist, um auf der Anzeigeeinheit die Schnittstelle der lokalen Bediengeräte (201) einer jeden Maschine (200) anzuzeigen, um dem Nutzer zu erlauben, die Maschine (200) mit den Einstelldaten aus einer Fernposition unter Nutzung des tragbaren Bediengeräts (8) zu konfigurieren, wobei die Fertigungsstraße (100) **dadurch gekennzeichnet ist, dass** eine jede Maschine (200) zudem eine lokale Steuereinheit beinhaltet, die programmiert ist, um zu erlauben, dass die Maschine (200) von jeweils einem Single Access Point konfiguriert wird, wobei das lokale Bediengerät (201) der Maschine (200), das mindestens eine tragbare Bediengerät (8) und die Überwachungseinheit (9) mögliche Access Points bereitstellen,
wobei eine jede lokale Steuereinheit programmiert ist, um als Reaktion auf eine Bedienanfrage vom tragbaren Bediengerät (8) oder von der Überwachungseinheit (9) einen Zeitgeber für einen bestimmten Zeitraum zu aktivieren, sowie programmiert ist, um die Bedienung als Reaktion auf einen Befehl zur Ablehnung der Autorisierung, der mittels des lokalen Bediengeräts (8) innerhalb des vorgegebenen Zeitraums festgelegt wird, abzulehnen, und programmiert ist, um die Bedienung als Reaktion auf
i) einen Befehl zum Akzeptieren der Autorisierung, der über die lokalen Bediengeräte (201) innerhalb des vorgegebenen Zeitraums festgelegt wird, oder
ii) sofern im vorgegebenen Zeitraum kein Befehl zum Akzeptieren oder Ablehnen der Autorisierung durch das lokale Bediengerät (8) festgelegt wird, dem tragbaren Bediengerät (8) oder der Überwachungseinheit (9) zuzuordnen.

2. Fertigungsstraße (100) nach Anspruch 1, wobei das tragbare Bediengerät (8) konfiguriert ist, um auf der Anzeigeeinheit die Schnittstelle der Überwachungseinheit (9) anzuzeigen, um dem Nutzer zu erlauben, die Überwachungstätigkeiten aus einer Fernposition unter Nutzung des tragbaren Bediengeräts (8) zu verwalten.

3. Fertigungsstraße (100) nach Anspruch 1 oder 2, wobei eine jede Maschine (200) eine lokale Steuereinheit aufweist, die programmiert ist, um zu erlauben, dass die Maschine (200) jeweils von einem Single Access Point konfiguriert wird, wobei der Access Point alternativ das lokale Bediengerät (201) der betreffenden Maschine (200), das mindestens eine tragbare Bediengerät (8) oder die Überwachungseinheit (9) ist.

4. Fertigungsstraße (100) nach Anspruch 3, wobei die lokale Steuereinheit einer jeden Maschine programmiert ist, um bei einer Bedienanfrage von mehr als einem Access Point gleichzeitig einschließlich des lokalen Access Point die Bedienung dem lokalen Bediengerät (8) zuzuordnen.

5. Fertigungsstraße (100) nach einem der Ansprüche 2 bis 4, wobei die lokale Steuereinheit einer jeden Maschine (200) programmiert ist, um dem Nutzer zu erlauben, die Bedienung als Reaktion auf eine Bedienanfrage vom Remote Access Point unter Nutzung des lokalen Bediengeräts (201) der Maschine (200) von einem Remote Access Point zu gewähren oder abzulehnen.

6. Fertigungsstraße (100) nach einem der vorhergehenden Ansprüche, wobei der Prozessor des tragbaren Bediengeräts (8) programmiert ist, um eine Anzeige einer beliebigen Schnittstelle der lokalen Bediengeräte (201) oder der Steuereinheit in einem Anzeigemodus zu erlauben, in dem es dem Nutzer nicht erlaubt ist, die Maschinen (200) mit den Einstelldaten zu konfigurieren.

7. Fertigungsstraße nach einem der vorhergehenden Ansprüche, umfassend mindestens ein Tablet oder Smartphone oder einen Laptop, definierend das mindestens eine tragbare Bediengerät (8).

8. Fertigungsstraße (100) nach einem der vorhergehenden Ansprüche, wobei eine jede Maschine (200) ausgestaltet ist, um ein entsprechendes Steuersignal zu empfangen, darstellend die Einstelldaten für die Maschine (200), und wobei die Überwachungseinheit (9) konfiguriert ist, um den Maschinen (200) automatisch entsprechende Steuersignale zu deren Konfiguration mit den jeweiligen Einstelldaten zu übermitteln.

9. Fertigungsstraße (100) nach einem der vorhergehenden Ansprüche, umfassend mindestens einen Sensor (10) zum Generieren eines Mustersignals, darstellend eine Position der Produkte, die sich entlang der Fertigungsstraße durch die Maschinen (200) und den Förderer (7) bewegen, wobei die Überwachungseinheit (9) mit dem mindestens einen Sensor (10) verbunden ist, um das Mustersignal zu empfangen und konfiguriert ist, um den Maschinen (200) in Echtzeit entsprechende Steuersignale zu übermitteln, die mit den in den jeweiligen Maschinen (200) befindlichen Produkten verknüpft sind.

10. Fertigungsstraße (100) nach einem der vorhergehenden Ansprüche, wobei die Fertigungsstraße (100) eine Fertigungsstraße (100) für die Herstellung dekorierter Keramikprodukte in einem kontinuierlichen Zyklus ist, umfassend eine oder mehrere der folgenden Maschinen:
- eine Beschickungsmaschine (1), die konfiguriert ist, um auf einem Förderer (7) Keramikpulver (12) nach dem Platzierungsmuster als eine Funktion von Einstelldaten der Beschickungsmaschine (1) zu platzieren;
- eine Pressmaschine (2), die konfiguriert ist, um das von der Beschickungsmaschine (1) platzierte Pulver (12) zur Herstellung von Keramikprodukten zu verdichten, aufweisend eine Oberfläche, als eine Funktion von Einstelldaten der Pressmaschine (2);
- eine Färbungsmaschine (4), die mit Druckköpfen ausgestattet ist, verbunden mit einem Tintenkreislauf, konfiguriert, um Tinte auf der Oberfläche des Keramikprodukts nach einem Färbungsmuster als eine Funktion der Einstelldaten der Färbungsmaschine (4) aufzutragen.

11. Fertigungsstraße (100) nach Anspruch 10, zudem umfassend eine oder mehrere der folgenden Maschinen:
- eine Glasurmaschine (3), die zwischen der Pressmaschine (2) und der Färbungsmaschine (4) positioniert und konfiguriert ist, um flüssiges Material auf der Oberfläche des Keramikprodukts nach einem Glasurmuster als eine Funktion von Einstelldaten der Glasurmaschine (3) zu platzieren;
- eine Schutzglasurmaschine (5), die nach der Färbungsmaschine (4) positioniert und konfiguriert ist, um eine Schutzglasur auf der Oberfläche des durch die Färbungsmaschine (4) gefärbten Keramikprodukts nach einem Schutzglasurmuster als eine Funktion von Einstelldaten der Schutzglasurmaschine (5) aufzubringen;
- eine Maschine zum Auftragen einer Pulverglasur (6), die nach der Färbungsmaschine (4) positioniert und konfiguriert ist, um eine Pulverglasur auf der Oberfläche des durch die Färbungsmaschine (4) gefärbten Keramikprodukts nach einem Pulverglasurauftragungsmuster als eine Funktion von Einstelldaten der Pulverglasurmaschine (6) aufzutragen.

12. Fertigungsstraße (100) nach einem der Ansprüche 1 bis 9, wobei die Fertigungsstraße (100) eine Fertigungsstraße zum Befüllen von aus thermoplastischem Material bestehenden Behältern in einem kontinuierlichen Zyklus ist, umfassend die folgenden Maschinen:
- eine Formungseinheit zur Herstellung von Vorformlingen aus thermoplastischem Material aus dem thermoplastischen Material in seiner Rohform;
- eine Einheit zur thermischen Behandlung von Vorformlingen, die konfiguriert ist, um die Vorformlinge von der Formungseinheit zu erhalten und die Vorformlinge zu erwärmen und zu kühlen;
- eine Blasformungseinheit, die konfiguriert ist, um die erwärmten Vorformlinge von der Behandlungseinheit zu erhalten und per Blasformen zu Formen zu formen, sodass Behälter hergestellt werden, die ausgestaltet sind, um befüllt zu werden;
- eine Fülleinheit, die konfiguriert ist, um die Behälter von der Blasformungseinheit zu empfangen und sie mit flüssigen oder halbflüssigen Nahrungsmittelprodukten zu füllen;
- eine Formungseinheit zur Herstellung von Verschlüssen aus thermoplastischem Material aus dem thermoplastischen Material in seiner Rohform;
- eine Verschließeinheit, die konfiguriert ist, um die Verschlüsse von der Einheit zur Formung von Verschlüssen zu erhalten und die Verschlüsse sicher an den jeweiligen befüllten Behältern anzubringen.

13. Fertigungsstraße (100) nach Anspruch 12, zudem umfassend ein Speichersystem, das konfiguriert ist, um die Vorformlinge und/oder Verschlüsse und/oder Behälter zu enthalten und das mit einer oder mehreren der anderen Maschinen der Fertigungsstraße (100) verbunden ist, um zu speichernde Produkte zu empfangen und die anderen Maschinen mit zuvor gespeicherten Produkten zu beschicken.

14. Fertigungsstraße (100) nach einem der vorhergehenden Ansprüche, umfassend eine Projektierungsvorrichtung (17), aufweisend:
- einen Speicher, der eine Datenbank enthält, die ein mathematisches Modell des Betriebs der Fertigungsstraße definiert, aufweisend eine Vielzahl von Modellparametern;
- eine Anzeigeeinheit (19) zum Anzeigen eines Bilds (11) eines Produkts nach den entsprechenden Bilddaten;
- eine Schnittstelle (20), die mit einem Computer (18) verbunden ist, um dem Nutzer zu erlauben, Konfigurationsparameter aufzurufen, die sich auf entsprechende Merkmale des Produkts beziehen, wobei der Computer (18) programmiert ist, um die Bilddaten als eine Funktion der Konfigurationsparameter zu aktualisieren, um auf der Anzeigeeinheit (19) ein Produkt, aufweisend die Merkmale, anzuzeigen, sowie programmiert ist, um die Konfigurationsparameter als eine Funktion des mathematischen Modells zu verarbeiten, um Einstelldaten für die Maschinen (200) der Fertigungsstraße (100) zu generieren, sodass die Fertigungsstraße (100) ein Produkt mit den Merkmalen herstellt, wenn die Maschinen (200) der Fertigungsstraße (100) mit den generierten Einstelldaten eingerichtet sind.

15. Verfahren zur aufeinanderfolgenden Herstellung von Einzelprodukten in einem kontinuierlichen Zyklus in einer Fertigungsstraße (100), aufweisend eine Vielzahl von Maschinen (200), die miteinander durch einen oder mehrere Förderer (7) nach einer vorgegebenen Abfolge verbunden sind, wobei eine jede Maschine (200) ein lokales Bediengerät (201) aufweist, das auf der Maschine (200) positioniert ist, und eine Schnittstelle formt, um einem Nutzer zu erlauben, die Maschine (200) mit Einstelldaten für die Maschine (200) zu konfigurieren, umfassend die folgenden Schritte:
- Vorbereiten von mindestens einem tragbaren Bediengerät (8), umfassend eine Anzeigeeinheit und eine Schnittstelle für den Nutzer, das in drahtloser Kommunikation mit allen lokalen Bediengeräten (201) der Maschinen (200) der Fertigungsstraße (100) ist;
- Anzeigen der Schnittstelle der lokalen Bediengeräte (201) von einer der Maschinen (200) der Fertigungsstraße (100), die vom Nutzer ausgewählt wurde, auf der Anzeigeeinheit des tragbaren Bediengeräts (8);
- Konfigurieren der Maschine (200) mit entsprechenden Einstelldaten aus einer Fernposition unter Nutzung des tragbaren Bediengeräts (8), wobei das Verfahren **dadurch gekennzeichnet ist, dass** eine jede Maschine (200) zudem eine lokale Steuereinheit beinhaltet, die programmiert ist, um zu erlauben, dass die Maschine (200) jeweils von einem Single Access Point konfiguriert wird, wobei das lokale Bediengerät (201) der Maschine (200), das mindestens eine tragbare Bediengerät (8) und die Überwachungseinheit (9) mögliche Access Points bereitstellen,
sowie dadurch, dass das Verfahren die folgenden Schritte umfasst, die von einer jeden lokalen Steuereinheit durchgeführt werden können:
- Aktivieren eines Zeitgebers für einen vorgegebenen Zeitraum als Reaktion einer Bedienanfrage vom tragbaren Bediengerät (8) oder der Überwachungseinheit (9);
- Ablehnen der Bedienung, wenn ein Befehl zur Ablehnung der Autorisierung über das lokale Bediengerät (8) innerhalb des vorgegebenen Zeitraums festgelegt wurde;
- Zuordnen der Bedienung zum Bediengerät (8) oder von der Überwachungseinheit (9), wenn eins der folgenden Ereignisse eintritt:
i) Ein Befehl zum Akzeptieren der Autorisierung wurde über das lokale Bediengerät (201) innerhalb des vorgegebenen Zeitraums festgelegt oder
ii) der vorgegebene Zeitraum endet, ohne dass über das lokale Bediengerät (8) im vorgegebenen Zeitraum ein Befehl zum Akzeptieren oder Ablehnen der Autorisierung gesendet wird.

## Revendications

1. Chaîne (100) de fabrication de produits en succession, comprenant :
- une pluralité de machines (200) interconnectées par un ou plusieurs convoyeurs (7) selon une séquence prédéterminée ;
- pour chaque machine (200), un panneau de contrôle local (201) positionné sur la machine (200) et formant une interface pour permettre à un utilisateur de configurer la machine (200) avec des données de réglage pour cette machine (200) ;
- une unité de supervision (9) connectée aux machines (200) de la chaîne (100) pour recevoir et transmettre des données, définissant ainsi une activité pour la surveillance des machines (200), et comportant une interface respective pour l'utilisateur ;
- au moins un panneau de contrôle portable (8), incluant :
- une unité d'affichage ;
- une interface utilisateur ;
- un module de connexion, pour mettre le panneau de contrôle portable (8) en communication sans fil avec tous les panneaux de contrôle locaux (201) des machines (200) de la chaîne (100) et avec l'unité de supervision (9) ;
- un processeur programmé pour afficher sur l'unité d'affichage l'interface des panneaux de contrôle locaux (201) de chaque machine (200), pour permettre à l'utilisateur de configurer la machine (200) avec les données de réglage, à partir d'une position à distance en utilisant le panneau de contrôle portable (8),
la chaîne (100) étant **caractérisée en ce que** chaque machine (200) inclut de plus une unité de contrôle locale étant programmée pour permettre à la machine (200) d'être configurée à partir d'un seul point d'accès à la fois, dans laquelle le panneau de contrôle local (201) de la machine (200), l'au moins un panneau de contrôle portable (8) et l'unité de supervision (9) fournissent des points d'accès possibles,
dans laquelle chaque unité de contrôle locale est programmée pour activer un temporisateur pendant un intervalle de temps prédéterminé, en réponse à une demande de contrôle provenant du panneau de contrôle portable (8) ou de l'unité de supervision (9), et est programmée pour refuser le contrôle, en réponse à une commande de refus d'autorisation établie par le panneau de contrôle local (8) dans l'intervalle de temps prédéterminé, et est programmée pour attribuer le contrôle au panneau de contrôle portable (8) ou à l'unité de supervision (9), en réponse à
i) une commande d'acceptation de l'autorisation établie par le panneau de contrôle local (201) dans l'intervalle de temps prédéterminé, ou
ii) une absence de toute commande d'acceptation ou de refus d'autorisation établie par le panneau de contrôle local (8) dans l'intervalle de temps prédéterminé.

2. Chaîne (100) selon la revendication 1, dans laquelle le panneau de contrôle portable (8) est configuré pour afficher sur l'unité d'affichage l'interface de l'unité de supervision (9), pour permettre à l'utilisateur de gérer les activités de supervision à partir d'une position à distance en utilisant le panneau de contrôle portable (8).

3. Chaîne (100) selon la revendication 1 ou 2, dans laquelle chaque machine (200) comporte une unité de contrôle locale programmée pour permettre à la machine (200) d'être configurée à partir d'un seul point d'accès à la fois, dans laquelle le point d'accès est, alternativement, le panneau de contrôle local (201) de cette machine (200), l'au moins un panneau de contrôle portable (8), ou l'unité de supervision (9).

4. Chaîne (100) selon la revendication 3, dans laquelle l'unité de contrôle locale de chaque machine est programmée pour attribuer, en présence d'une demande de contrôle provenant de plus d'un point d'accès simultanément, incluant le point d'accès local, le contrôle au panneau de contrôle local (8).

5. Chaîne (100) selon l'une quelconque des revendications 2 à 4, dans laquelle l'unité de contrôle locale de chaque machine (200) est programmée pour permettre à l'utilisateur d'accorder ou de refuser le contrôle à partir d'un point d'accès à distance, en réponse à une demande de contrôle provenant du point d'accès à distance, en utilisant le panneau de contrôle local (201) de la machine (200).

6. Chaîne (100) selon l'une quelconque des revendications précédentes, dans laquelle le processeur du panneau de contrôle portable (8) est programmé pour permettre un affichage de toute interface des panneaux de contrôle locaux (201) ou de l'unité de contrôle, dans un mode d'affichage dans lequel à l'utilisateur n'est pas permis de configurer les machines (200) avec les données de réglage.

7. Chaîne selon l'une quelconque des revendications précédentes, comprenant au moins une tablette ou un Smartphone ou un PC portable, définissant l'au moins un panneau de contrôle portable (8).

8. Chaîne (100) selon l'une quelconque des revendications précédentes, dans laquelle chaque machine (200) est conçue pour recevoir un signal de contrôle correspondant représentant les données de réglage pour la machine (200), et dans laquelle l'unité de supervision (9) est configurée pour transmettre aux machines (200), automatiquement, des signaux de contrôle correspondants pour la configurer avec les données de réglage respectives.

9. Chaîne (100) selon l'une quelconque des revendications précédentes, comprenant au moins un capteur (10) servant à générer un signal de motif représentant une position des produits se déplaçant le long de la chaîne à travers les machines (200) et le convoyeur (7), dans laquelle l'unité de supervision (9) est reliée à l'au moins un capteur (10) pour recevoir le signal de motif et étant configurée pour transmettre aux machines (200) en temps réel des signaux de contrôle correspondants relatifs aux produits situés dans les machines (200) respectives.

10. Chaîne (100) selon l'une quelconque des revendications précédentes, dans laquelle la chaîne (100) est une chaîne (100) pour la production de produits céramiques décorés dans un cycle continu, comprenant une ou plusieurs des machines suivantes :
- une machine d'alimentation (1) configurée pour placer sur un convoyeur (7) de la poudre céramique (12) selon une configuration de placement, en fonction des données de réglage de la machine d'alimentation (1) ;
- une presse (2) configurée pour compacter la poudre (12) placée par la machine d'alimentation (1) pour fabriquer des produits céramiques comportant une surface, en fonction des données de réglage de la presse (2) ;
- une machine à colorer (4), équipée de têtes d'impression reliées à un circuit d'encre, configurée pour appliquer l'encre sur la surface du produit céramique selon un motif de coloration, en fonction des données de réglage de la machine à colorer (4).

11. Chaîne (100) selon la revendication 10, comprenant de plus une ou plusieurs des machines suivantes :
- une machine à émailler (3), positionnée entre la presse (2) et la machine à colorer (4), configurée pour placer un matériau liquide sur la surface du produit céramique, selon un motif d'émaillage en fonction des données de réglage de la machine à émailler (3) ;
- une machine à émailler de protection (5), placée en aval de la machine à colorer (4), et configurée pour appliquer un émaillage de protection sur la surface du produit céramique colorée par la machine à colorer (4), selon un motif d'émaillage de protection en fonction des données de réglage de la machine à émailler de protection (5) ;
- une machine d'application (6) d'émaillage en poudre, placée en aval de la machine à colorer (4) et configurée pour appliquer un émaillage en poudre sur la surface du produit céramique colorée par la machine à colorer (4) selon un motif d'application d'émaillage en poudre, en fonction des données de réglage de la machine d'application (6) d'émaillage en poudre.

12. Chaîne (100) selon l'une quelconque des revendications 1 à 9, dans laquelle la chaîne (100) est une chaîne pour l'embouteillage en cycle continu de récipients en matière thermoplastique, comprenant une ou plusieurs des machines suivantes :
- une unité de moulage pour fabriquer des ébauches en matière thermoplastique à partir de la matière thermoplastique à l'état brut ;
- une unité de conditionnement thermique d'ébauches configurée pour recevoir les ébauches de l'unité de moulage et pour chauffer et refroidir les ébauches ;
- une unité de moulage par soufflage configurée pour recevoir les ébauches chauffées de l'unité de conditionnement et pour les souffler dans les moules de manière à fabriquer des récipients destinés à être remplis ;
- une unité de remplissage configurée pour recevoir les récipients de l'unité de moulage par soufflage et pour les remplir avec des produits alimentaires liquides ou semi-liquides ;
- une unité de moulage pour fabriquer des bouchons en matière plastique à partir de matière plastique à l'état brut ;
- une unité de capsulage, configurée pour recevoir les bouchons de l'unité de moulage de bouchons pour appliquer les bouchons en toute sécurité aux récipients pleins respectifs.

13. Chaîne (100) selon la revendication 12, comprenant de plus un système de stockage configuré pour contenir les ébauches et/ou les bouchons et/ou les récipients et relié à une ou plusieurs des autres machines de la chaîne (100) pour recevoir les produits à stocker et pour alimenter les autres machines avec les produits stockés précédemment.

14. Chaîne (100) selon l'une quelconque des revendications précédentes, comprenant un dispositif de conception (17) comportant :
- une mémoire contenant une base de données définissant un modèle mathématique du fonctionnement de la chaîne comportant une pluralité de paramètres de modèle ;
- une unité d'affichage (19) servant à afficher une image (11) d'un produit en fonction des données d'image correspondantes ;
- une interface (20) connectée à un ordinateur (18) pour permettre à l'utilisateur d'entrer des paramètres de configuration relatifs aux caractéristiques correspondantes du produit, dans laquelle l'ordinateur (18) est programmé pour mettre à jour les données d'image en fonction des paramètres de configuration pour afficher sur l'unité d'affichage (19) un produit ayant les caractéristiques, et étant programmé pour traiter les paramètres de configuration en fonction du modèle mathématique, pour générer des données de réglage pour les machines (200) de la chaîne (100), de sorte que la chaîne (100) fabrique un produit avec les caractéristiques lorsque les machines (200) de la chaîne (100) sont réglées avec les données de réglage générées.

15. Procédé pour la production de produits individuels en succession dans un cycle continu dans une chaîne (100) comportant une pluralité de machines (200) interconnectées par un ou plusieurs convoyeurs (7) selon une séquence prédéterminée ; dans lequel chaque machine (200) comporte un panneau de contrôle local (201) positionné sur la machine (200) et formant une interface pour permettre à un utilisateur de configurer la machine (200) avec des données de réglage pour cette machine (200), comprenant les étapes suivantes :
- préparer au moins un panneau de contrôle portable (8), comprenant une unité d'affichage et une interface pour l'utilisateur, et en communication sans fil avec tous les panneaux de contrôle locaux (201) des machines (200) de la chaîne (100) ;
- afficher sur l'unité d'affichage du panneau de contrôle portable (8) l'interface des panneaux de contrôle locaux (201) d'une des machines (200) de la chaîne (100) sélectionnée par l'utilisateur ;
- configurer la machine (200) avec les données de réglage correspondantes, à partir d'une position à distance en utilisant le panneau de contrôle portable (8), le procédé étant **caractérisé en ce que** chaque machine (200) inclut de plus une unité de contrôle locale étant programmée pour permettre à la machine (200) d'être configurée à partir d'un seul point d'accès à la fois, dans lequel le panneau de contrôle local (201) de la machine (200), l'au moins un panneau de contrôle portable (8) et l'unité de supervision (9) fournissent des points d'accès possibles,
et **en ce que** le procédé comprend les étapes suivantes pouvant être réalisées par chaque unité de contrôle locale :
- activer un temporisateur pendant un intervalle de temps prédéterminé, en réponse à une demande de contrôle provenant du panneau de contrôle portable (8) ou de l'unité de supervision (9) ;
- refuser le contrôle, si une commande de refus d'autorisation est définie par le panneau de contrôle local (8) dans l'intervalle de temps prédéterminé ;
- attribuer le contrôle au panneau de contrôle (8) ou à partir de l'unité de supervision (9), si l'un des événements suivants se produit
i) une commande d'acceptation de l'autorisation est établie par le panneau de contrôle local (201) dans l'intervalle de temps prédéterminé, ou
ii) l'intervalle de temps prédéterminé se termine sans qu'aucune commande d'acceptation ou de refus d'autorisation ne soit envoyée par l'intermédiaire du panneau de contrôle local (8) dans l'intervalle de temps prédéterminé.
